# EUROPÄISCHE PATENTSCHRIFT

(11) **EP 2 307 696 B1**
(45) Veröffentlichungstag und Bekanntmachung des Hinweises auf die Patenterteilung: **15.02.2012**
(21) Anmeldenummer: 09780537.8
(22) Anmeldetag: 14.07.2009
(51) Int. Cl.: B01D 36/00, F02M 37/22

(54) **KRAFTSTOFFFILTER**
FUEL FILTER
FILTRE À CARBURANT

(30) Priorität: 26.07.2008 DE 102008034900
(43) Veröffentlichungstag der Anmeldung: 13.04.2011
(73) Patentinhaber: Mahle International GmbH, 70376 Stuttgart (DE)
(72) Erfinder: BRAUNHEIM, Michael, 73033 Göppingen (DE); GÄNSWEIN, Matthias, 73732 Esslingen (DE); SIEGLE, Sven, 71364 Winnenden (DE); HRODEK, Jörg, A-9125 Mittlern (AT); WLASSA, Richard, 70469 Stuttgart (DE)
(74) Vertreter: BRP Renaud & Partner
(86) Internationale Anmeldenummer: PCT/EP2009/058955
(87) Internationale Veröffentlichungsnummer: WO 2010/012584

(56) Entgegenhaltungen:
- DE-A1- 10 138 695
- DE-A1- 10 302 057
- DE-A1- 19 605 431
- DE-A1-102004 036 070
- DE-A1-102006 039 581
- DE-A1-102007 039 661

## Beschreibung

Die vorliegende Erfindung betrifft einen Kraftstofffilter für einen Verbrennungsmotor einen Kraftfahrzeuges, gemäß dem Oberbegriff des Anspruchs 1. Die Erfindung betrifft außerdem ein Kraftfahrzeug mit einem, ein derartiges Kraftstofffilter aufweisenden Verbrennungsmotor.

Kraftstofffilter finden sich heutzutage in nahezu sämtlichen Kraftfahrzeugen und dienen der Reinigung des Kraftstoffes vor der Zuführung in eine Brennkammer eines Verbrennungsmotors. Häufig weisen derartige Kraftstofffilter auch einen Wassersammelraum auf, in welchem aus dem Kraftstoff abgeschiedenes Wasser gesammelt und über einen entsprechenden Auslass gegebenenfalls abgelassen werden kann. Derartigen Wassersammelräumen nachgeschaltet, ist dabei oftmals ein Aktivkohlefilter, welches verhindern soll, dass noch im abgeschiedenen Wasser vorhandene Kraftstoffanteile, das heißt Kohlenwasserstoffe, unkontrolliert in die Umgebung gelangen. Nachteilig bei derartigen Kraftstofffiltern ist jedoch, dass diese bei Betriebsbeginn zunächst vollständig von Kraftstoff durchflossen sind, so dass bei der Inbetriebnahme üblicherweise auch der Wassersammelraum mit Kraftstoff gefüllt ist. Ist dann zwischen dem Wassersammelraum und dem stromab gelegenen Aktivkohlefilter keine Ventileinrichtung vorgesehen, kann der Kraftstoff direkt mit der Aktivkohle im Aktivkohlefilter in Kontakt treten und diese sättigen. In diesen Fällen ist ein außergewöhnlich großes Volumen an Aktivkohle erforderlich, um ein Abscheiden von Kohlenwasserstoffanteilen aus dem abgeschiedenen Wasser während der gesamten Betriebsdauer des Kraftstofffilters noch gewährleisten zu können.

Aus der DE 10 2007 039 661 A1 ist ein gattungsgemäßes Kraftstofffilter bekannt, das zwei nach einem Wassersammelraum angeordnete Ventileinrichtungen aufweist, die den Wasserraum flüssigkeitsdicht gegenüber den stromab angeordneten Aktivkohlefilter verschließt.

Ein weiteres Filter zur Absorption von Wasser aus Kraftstoffen ist beispielsweise aus der DE 103 02 057 A1 bekannt.

Die vorliegende Erfindung beschäftigt sich mit dem Problem, eine verbesserte oder zumindest eine andere Ausführungsform eines gattungsgemäßen Kraftstofffilters anzugeben, welche sich insbesondere durch ein kleinvolumiges Aktivkohlefilter auszeichnet.

Dieses Problem wird erfindungsgemäß durch die Gegenstände der unabhängigen Ansprüche gelöst. Vorteilhafte Ausführungsformen sind Gegenstand der abhängigen Ansprüche.

Die Erfindung beruht auf dem allgemeinen Gedanken, bei einem Kraftstofffilter mit einem Wassersammelraum zum Sammeln von aus dem Kraftstoff abgeschiedenen Wasser und einem diesem nachgeschalteten Aktivkohlefilter, zwischen letzterem und dem Wassersammelraum eine wasserlösliche Trenneinrichtung, insbesondere eine wasserlösliche Trennschicht, vorzusehen, welche für Kraftstoff undurchlässig bzw. von Kraftstoff nicht auflösbar ist, von Wasser hingegen problemlos löslich ist. Dies bietet den besonderen Vorteil, dass das Kraftstofffilter nach dem Einbau, das heißt zu Beginn des Betriebs, zunächst problemlos von Kraftstoff durchflossen werden kann, ohne dass dieser in direkten Kontakt mit der Aktivkohle im Aktivkohlefilter treten und diese sättigen kann. Wird bei länger andauerndem Betrieb des Kraftstofffilters zunehmend Wasser aus dem zu filternden Kraftstoff abgeschieden, so lagert dieser sich im Wassersammelraum an und beginnt die Trenneinrichtung, respektive die Trennschicht zum Aktivkohlefilter aufzulösen. Durch das Auflösen der Trennschicht wird ein Durchtritt von aus dem Kraftstoff abgeschiedenem Wasser in den Aktivkohlefilter ermöglicht, so dass in diesem die noch im abgeschiedenen Wasser vorhandenen Kraftstoffanteile problemlos adsorbiert werden können. Im Unterschied zu aufwendigen Ventileinrichtungen, welche selbstverständlich optional trotzdem vorgesehen sein können, bietet die erfindungsgemäße Trenneinrichtung den großen Vorteil, das Aktivkohlefilter des erfindungsgemäßen Kraftstofffilters wirkungsvoll vor Kraftstoff, insbesondere während der Inbetriebnahme, zu schützen, so dass das für den Aktivkohlefilter vorgesehene Volumina an Aktivkohle deutlich kleiner gehalten werden kann, als dies bei bisher bekannten Kraftstofffiltern möglich wäre. Die wasserlösliche Trenneinrichtung bzw. die wasserlösliche Trennschicht ist dabei vorzugsweise ökologisch unbedenklich und kann den Aktivkohlefilter mit dem aus dem Kraftstoff abgeschiedenen Wasser durchqueren und anschließend in die Umgebung abgelassen werden.

Bei einer vorteilhaften Weiterbildung der erfindungsgemäßen Lösung, weist die wasserlösliche Trenneinrichtung bzw. die wasserlösliche Trennschicht, Stärke auf. Stärke ist nicht nur ökologisch, sondern selbst physiologisch unbedenklich, da Stärke ein Polysaccharid mit aus Glucose bestehenden Einheiten darstellt. Stärke kann dabei insbesondere auf natürliche Weise, beispielsweise als Kartoffelstärke, gewonnen werden und ist darüber hinaus ein kostengünstiger und nahezu unbegrenzt vorhandener Stoff. Generell ist derartige Stärke von Kraftstoff nicht auflösbar bzw. nicht zersetzbar, so dass es eine natürliche und wirkungsvolle Barriere gegenüber Kraftstoff bilden kann, während bei einem Zutritt von Wasser die aus Stärke bestehende Trennschicht relativ schnell, insbesondere innerhalb weniger Minuten, aufgelöst werden kann. Die derart aufgelöste und aus Stärke bestehende Trennschicht kann dann den Aktivkohlefilter unbehelligt durchlaufen und mit dem von Kohlenstoffanteilen gereinigten Wasser bedenkenlos in die Umgebung abgelassen werden.

Bei einer vorteilhaften Weiterbildung der erfindungsgemäßen Lösung, ist die wasserlösliche Trenneinrichtung als Membran oder als Einlegeteil ausgebildet. Derartig ausgebildete Trenneinrichtungen können einerseits kostengünstig und andererseits in nahezu beliebiger Ausgestaltung hergestellt werden und insbesondere besonders leicht zwischen einem Ablass am Wassersammelraum und dem nachgeschalteten Aktivkohlefilter eingebaut werden. Die Trenneinrichtung kann dabei selbstverständlich an unterschiedlichste Kraftstofffilter adaptiert werden, so dass ein vielseitiger und stark verbreiteter Einsatz möglich ist.

Weitere wichtige Merkmale und Vorteile der Erfindung ergeben sich aus den Unteransprüchen, aus der Zeichnung und aus der zugehörigen Figurenbeschreibung anhand der Zeichnung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ein bevorzugtes Ausführungsbeispiel der Erfindung ist in der Zeichnung dargestellt und wird in der nachfolgenden Beschreibung näher erläutert.

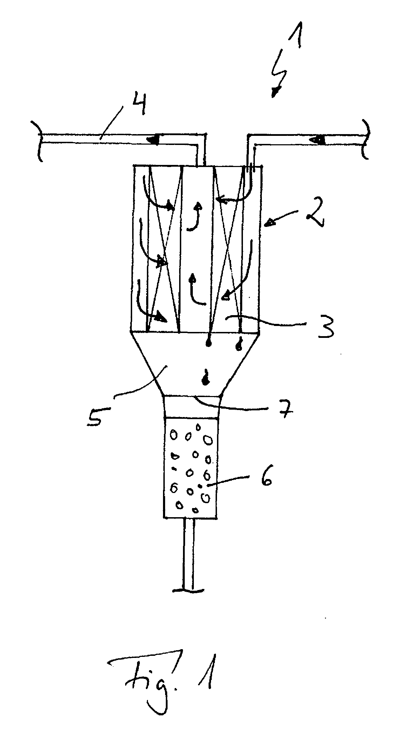

Die einzige Fig. 1 zeigt ein erfindungsgemäßes Kraftstofffilter.

Entsprechend der Fig. 1, weist ein erfindungsgemäßes Kraftstofffilter 1, ein Filtergehäuse 2 auf, in welchem ein, vorzugsweise ringförmig ausgebildetes Filterelement 3 angeordnet ist. Das Kraftstofffilter 1 ist dabei in eine Kraftstoffleitung 4 integriert und üblicherweise einem Verbrennungsmotor vorgeschaltet. Das gemäß der Fig. 1 dargestellte Kraftstofifilter 1 ist dabei von radial außen nach radial innen durchströmt, so dass innen die Reinseite und außen die Rohseite liegt. Unterhalb des Filterelementes 3 ist ein Wassersammelraum 5 zum Sammeln von aus dem Kraftstoff abgeschiedenem Wasser vorgesehen. Dieser Wassersammelraum 5 wird während der Inbetriebnahme des Kraftstofffilters 1 zusehends mit Wasser gefüllt, welches anschließend, beispielsweise turnusmäßig, in ein dem Wassersammelraum 5 nachgeschaltetes Aktivkohlefilter 6 abgelassen wird. In dem Aktivkohlefilter 6, werden die im aus dem Kraftstoff abgeschiedenen Wasser noch vorhandenen Kraftstoffanteile gebunden und an einem Austritt in die Umgebung gehindert. Nach Verlassen des Aktivkohlefilters 6, ist das abgelassene Wasser als vorzugsweise ökologisch unbedenklich zu betrachten.

Erfindungsgemäß ist nun eine wasserlösliche Trenneinrichtung 7, welche beispielsweise als wasserlösliche Trennschicht ausgebildet sein kann, vorgesehen, die im wesentlichen zwischen dem Wassersammelraum 5 und dem stromab dazu gelegenen Aktivkohlefilter 6 angeordnet ist. Die erfindungsgemäß angeordnete Trenneinrichtung 7 bewirkt dabei Folgendes: Während der Inbetriebnahme des Kraftstofffilters 1, das heißt bei dessen Erstbefüllung, wird auch der Wassersammelraum 5 zunächst mit Kraftstoff befüllt. Bei einem ungehinderten Kontakt mit der Aktivkohle des Aktivkohlefilters 6, würde diese während der Inbetriebnahme des Kraftstofffilters 1 außergewöhnlich schnell gesättigt, weshalb ein besonders großes Volumen an Aktivkohle vorgesehen werden muss. Durch die erfindungsgemäße Trennschicht 7 hingegen, kann insbesondere bei einer Inbetriebnahme des Kraftstofffilters 1, ein direkter Kontakt des Kraftstoffes mit der Aktivkohle im Aktivkohlefilter 6 verhindert werden, so dass sich dieses nicht sättigt. Erst das sich mit der Zeit im Wassersammelraum 5 sammelnde Wasser trägt dann dazu bei, dass die wasserlösliche Trenneinrichtung 7 aufgelöst, das heißt wasserdurchlässig gemacht wird, so dass das im Vergleich zu Kraftstoff schwerere Wasser anschließend das Aktivkohlefilter 6 durchfließen kann. Kraftstoff ist dabei jedoch nicht in der Lage, die Trenneinrichtung 7 zu durchqueren.

Bei einer vorteilhaften Weiterbildung der erfindungsgemäßen Lösung, ist die wasserlösliche Trenneinrichtung 7 aus Stärke ausgebildet bzw. weist zumindest Stärke auf. Stärke ist ein natürlicher Werkstoff, welcher sowohl ökologisch als auch physiologisch unbedenklich ist und welcher einerseits kraftstoffresistent, andererseits jedoch wasserlöslich ist, so dass er für den Einsatz für die erfindungsgemäße Trenneinrichtung 7 besonders prädestiniert ist. Ein weiterer Vorteil von Stärke ist dabei, dass Stärke in nahezu unbegrenztem Maße, das heißt kostengünstig und in nahezu beliebiger Qualität zur Verfügung steht. Darüber hinaus kann die durch das im Wassersammelraum 5 gesammelte Wasser aufgelöste Trennschicht 7 problemlos mit dem das Aktivkohlefilter 6 durchlaufenden Wasser in die Umgebung abgelassen werden. Selbstverständlich können dabei zusätzlich optional zwischen dem Wassersammelraum 5 und dem Aktivkohlefilter 6 bzw. stromab des Aktivkohlefilters 6 weitere, nicht gezeigte Ventileinrichtungen vorgesehen sein, welche aber im Vergleich zum bisherigen Stand der Technik nicht unbedingt erforderlich sind. Von besonderem Vorteil ist hierbei auch, dass durch die Vermeidung des direkten Kontakts von Kraftstoff mit der Aktivkohle im Aktivkohlefilter 6 zu Beginn der Inbetriebnahme des Kraftstofffilters 1 ein Volumen an Aktivkohle im Aktivkohlefilter 6 deutlich kleiner gehalten werden kann, als dies bei herkömmlichen Aktivkohlefiltern der Fall ist. Somit lässt sich mit der erfindungsgemäßen Trenneinrichtung 7, welche äußerst kostengünstig und konstruktiv in nahezu beliebiger Ausführungsform herstellbar ist, auch ein deutlich kleineres Aktivkohlefilter 6 realisieren, wodurch die Herstellkosten des Kraftstofffilters 1 insgesamt gesenkt werden können.

## Patentansprüche

1. Kraftstofffilter (1) für einen Verbrennungsmotor eines Kraftfahrzeuges mit,
- einem, zumindest ein Filterelement (3) aufnehmenden, Filtergehäuse (2),
- einem Wassersammelraum (5) zum Sammeln von aus dem Kraftstoff abgeschiedenem Wasser,
- einem stromab des Wassersammelraums (5) angeordneten Aktivkohlefilter (6), **dadurch gekennzeichnet,**
**dass** eine wasserlösliche Trenneinrichtung (7), insbesondere eine wasserlösliche Trennschicht (7), vorgesehen ist, die zwischen dem Wassersammelraum (5) und dem Aktivkohlefilter (6) angeordnet und undurchlässig bzw. unlöslich gegenüber Kraftstoff ausgebildet ist.

2. Kraftstofffilter nach Anspruch 1,
**dadurch gekennzeichnet,**
**dass** die wasserlösliche Trenneinrichtung (7) Stärke aufweist.

3. Kraftstofffilter nach Anspruch 1 oder 2,
**dadurch gekennzeichnet,**
**dass** die wasserlösliche Trenneinrichtung (7) als Membran oder als Einlegeteil ausgebildet ist.

4. Kraftfahrzeug mit einem, ein Kraftstofffilter (1) nach einem der Ansprüche 1 bis 3, aufweisenden Verbrennungsmotor.

## Claims

1. A fuel filter (1) for an internal combustion engine of a motor vehicle, with
- a filter housing (2) which holds at least one filter element (3),
- a water collection chamber (5) for collecting water separated out of the fuel,
- an active carbon filter (6) which is arranged downstream of the water collection chamber (5),
**characterised in that**
a water-soluble dividing device (7), in particular a water-soluble dividing layer (7), is provided, which is arranged between the water collection chamber (5) and the active carbon filter (6) and is impermeable or insoluble to fuel.

2. The fuel filter according to Claim 1,
**characterised in that**
the water-soluble dividing device (7) contains starch.

3. The fuel filter according to Claim 1 or 2,
**characterised in that**
the water-soluble dividing device (7) is configured as a membrane or as an inserted part.

4. A motor vehicle with an internal combustion engine having a fuel filter (1) according to one of Claims 1 to 3.

## Revendications

1. Filtre à carburant (1) pour moteur à combustion interne d'un véhicule comportant
- un logement de filtre (2) renfermant au moins un élément de filtre (3),
- un espace d'accumulation d'eau (5) pour accumuler l'eau séparée du carburant,
- un filtre à charbon actif (6) disposé en aval de l'espace d'accumulation d'eau (5),
**caractérisé en ce que** un dispositif de séparation (7) soluble dans l'eau, notamment une couche de séparation (7) soluble dans l'eau est prévu, qui est disposé entre l'espace d'accumulation d'eau (5) et le filtre à charbon actif (6) et est réalisé de manière imperméable, respectivement insoluble par rapport au carburant.

2. Filtre à carburant selon la revendication 1,
**caractérisé en ce que**
le dispositif de séparation (7) soluble dans l'eau présente de l'amidon.

3. Filtre à carburant selon la revendication 1 ou 2,
**caractérisé en ce que**
le dispositif de séparation (7) soluble dans l'eau est réalisé comme une membrane ou une pièce d'insert.

4. Véhicule automobile comportant un moteur à combustion présentant un filtre à carburant (1) selon une des revendications 1 à 3.
